# EUROPEAN PATENT APPLICATION

(11) **EP 4 546 132 A1**
(43) Date of publication of application: **30.04.2025**
(21) Application number: 23205580.6
(22) Date of filing: 24.10.2023
(51) Int. Cl.: G06F 9/50, G06F 9/455, G06F 21/52, G06F 21/62

(54) **METHOD AND SYSTEM FOR EXECUTING A SAFETY-CRITICAL APPLICATION**

(71) Applicant: Elektrobit Automotive GmbH, 91058 Erlangen (DE)
(72) Inventor: LAMPKA, Kai, 81739 München (DE); BUTT, Muhammad Aqib Javaid, 81739 München (DE); HILDEBRAND, Uwe, 81739 München (DE); TEWS, Hendrick, 01097 Dresden (DE)
(74) Representative: Continental Corporation

(57) **Abstract**

A method of executing a safety-critical application (150) on a hardware platform (100) is proposed. The method includes executing, on the hardware platform (100), a hypervisor (120) with a monitoring component (130) for the safety-critical application (150), instantiating, by the hypervisor (120), at least one virtual machine (140) on a lower privilege level of the hardware platform than a privilege level of the hypervisor (120), providing a list of one or more predefined actions that, when executed by the processor core (112a, 112b), have a relevancy for an integrity and/or a functioning of the safety-critical application (150). The method further includes instructing, by the hypervisor (120), the processor core (112a, 112b) to when about to execute a to-be-performed action on the list, divert the control flow towards a respective handler (132) for this to-be-performed action in the monitoring component (130), and executing, in the at least one virtual machine (140), at least the safety-critical application (150) on top of a guest operating system (142). Further, a check whether to allow or disallow the action can be performed and/or at least one preparation for the to-be-performed action may be performed.

## Description

### Technical Field

The present invention, generally, relates to the field of safety-critical applications. More specifically, the present invention relates to a method for executing a safety-critical application on a hardware platform comprising at least one processor and/or processor core. Further, the present invention relates to a computing system configured to perform steps of such method, to one or more computer programs for instructing a computing system to perform steps of such method, and to a machine-readable data carrier and/or download product storing such one or more computer programs.

### Background

Safety-critical applications are usually defined or understood as software applications or programs whose failure or malfunction can at least in principle result in severe damage or harm, in particular damage or harm to one or more of machinery, equipment, human health, and environmental health. In other words, failure of a safety-critical application can cause an increase in the safety risk for human beings, machinery utilized, and/or environment involved.

Safety-critical applications can, for example, be run or executed on so-called safety-critical systems, which can include computing systems running one or more software-based safety-critical applications as well as more complex systems involving additional components, such as one or more sensors, one or more actuators, and/or other hardware components. Exemplary safety-critical systems and corresponding applications for controlling and/or monitoring one or more components can be found in vehicles, power plant control systems, manufacturing or production control systems, chemical plant control systems, building or facility control systems, and many others.

Various standards and recommendations have been defined for safety-critical applications and systems to ensure the correct or proper functioning thereof. Usually, such standards or recommendations relate to particular use cases, and/or equipment involved. For example, ISO standard 26262 recommended by the International Organization for Standardization, ISO, relates to safety-critical or safety-related systems that include electrical and/or electronic systems and that are installed in passenger cars or road vehicles. Therein, the standards and recommendations provide a set of guidelines and/or safety measures, which should be fulfilled by a safety-critical application and corresponding system to ensure correct functioning thereof. A safety-critical application or system complying with the standard or recommendation can also be referred to as safety-qualified application or system. Software applications or computing systems not complying with such standard, for example because they handle processes or functions that are not safety critical or relevant, on the other hand, can be referred to herein as non-safety-critical applications.

In many software applications and corresponding computing systems or environments, safety-critical applications can also be run or executed in parallel, sequentially, or alternately with non-safety-critical applications, or more generally can coexist with applications not fulfilling the safety level of the safety-critical applications. Alternatively, or additionally, safety-critical applications may be executed on top of a non-safety qualified OS or OS kernel. Such systems are usually referred to as mixed-criticality systems or mixed-criticality software systems. Mixed-criticality systems can be complex software-based systems, where software applications or software components of different criticality, including software of the OS, such as an OS kernel, can run on common hardware, for example one or more common processors, and the different applications are from different quality classes or safety levels, including at least one safety-critical application. This means not all of the applications in a mixed-criticality system are in adherence with the quality assurance measures as requested or recommended by standards like the ISO 26262 and with respect to the highest safety level any of the applications should comply with.

To ensure correct functioning of one or more safety-critical applications in such systems of mixed-criticality, freedom from interference between the software components differing in the quality and/or safety level associated with them should be ensured. Freedom from interference in general, and fault propagation in particular, between software components of different safety levels is commonly achieved by guaranteeing isolation of applications with respect to one or both space and time, where isolation can be implemented or monitored by using dedicated features of the underlying hardware.

For instance, isolation of private memory of applications can be guarded by memory protection or memory management units (MMUs), which can be implemented in processors, and which can deliver information about noticeable access violations. Other safety measures can relate to context switching between programs or applications, which refers to the process of storing the state of a process, program, thread, and/or application, so that it can be restored and resume execution at a later point in time. For safety-critical applications and mixed-critical systems, correct context switching may mean that the state of a safety-critical application should not get erroneously corrupted during a context switch, for example between the safety-critical and a non-safety-critical application.

The software used for making dedicated features of a processor of a hardware platform or computing system accessible is commonly encapsulated in a special program known as operating system kernel (also referred to as OS kernel or kernel herein). Generally, the kernel, OS kernel, and/or system kernel referred to herein may be regarded as supervisor program, which may have elevated privilege level when compared to other software components, programs or software executed on top of the kernel. The correctness of the hardware features one uses can require that the operating system kernel operates on the hardware in a correct way. Hence, correct functioning of a safety-critical application may rely or depend on correct functioning of the operating system kernel software. Also, this dependency may not only involve the software unit or kernel software, which operates the hardware feature under consideration, but may rather involve all software code, which may potentially impact the software unit under consideration, for example the entire OS kernel. With support of a single safety-related function that shall be ensured by executing a safety-critical application, this yields the common understanding that an operating system kernel in its entirety should be qualified for being used in a safety context or should be monitored.

### Summary

It may, therefore, be desirable to provide for an improved method of executing a safety-critical application, which overcomes the aforementioned drawbacks, in particular which allows for safe execution of a safety-critical application on any operating system and/or operating system kernel.

This is achieved by the subject matter of the independent claims, wherein further embodiments are included in the dependent claims and in the following description.

Aspects of the present disclosure relate to a method for executing a safety-critical application on a hardware platform, to a computing system configured to perform steps of such method, to one or more computer programs for instructing a computing system to perform steps of such method, and to a machine-readable data carrier and/or download product storing such one or more computer programs. It is emphasized that any feature, function, element, and advantage described herein with reference to one aspect of the present disclosure, equally applies to any other aspect of the present disclosure described herein.

According to an aspect of the present disclosure, there is provided a method for executing a safety-critical application on a hardware platform, the hardware platform comprising at least one processor and/or processor core. The method comprises the steps of:
- executing, on the hardware platform, a hypervisor, said hypervisor comprising a monitoring component for the safety-critical application;
- instantiating, by the hypervisor, at least one virtual machine on a lower privilege level of the hardware platform than a privilege level of the hypervisor;
- providing a list of one or more predefined actions that, when executed by the processor core, have a relevancy for an integrity and/or a functioning of the safety-critical application;
- instructing, by the hypervisor, the processor core to: when about to execute a to-be-performed action on the list, divert the control flow towards a respective handler for this to-be-performed action in the monitoring component;
- executing, in the at least one virtual machine, at least the safety-critical application on top of a guest operating system; and
- when control flow is diverted to a handler for a to-be-performed action:
   ∘ checking, by the handler, according to a predetermined ruleset, whether to allow or to disallow the to-be-performed action, and when the to-be-performed action is to be allowed, causing the action to be performed; and/or
   ∘ performing, by the handler, at least one preparation for the to-be-performed action, and then causing this to-be-performed action to be performed.

The features and steps of the aforementioned method synergistically ensure or allow for safe execution of the safety-critical application on the hardware platform on top of any guest operating system ("OS"), for example including any guest OS kernel, kernel software, or kernel component. In other words, the features and steps of the aforementioned method can synergistically interact to ensure freedom from interference (FFI) of the safety-critical application in terms of one or both space and time. In particular, the method of the present disclosure can allow for safe execution of the safety-critical application without necessarily requiring the software components of the guest OS, such as the entire guest OS kernel, to be safety-qualified. In turn, this can allow for safe execution of the safety-critical application on various different hardware platforms, with software components, and optionally hardware components, which may not be safety qualified.

It is emphasized that the method and computing system according to the present disclosure can be used to advantage on safety-qualified systems and/or in mixed criticality systems. Hence, the present disclosure is not limited in this respect. Also, the present invention can be used to advantage in conjunction with any kernel, including safety-qualified and non-safety-qualified kernels, such as e.g., a Linux-based kernel.

The term "application" as used herein can refer to or include a software application or program. The term "application" as used herein is not necessarily limited to pure software applications, but can include software-based applications, which may optionally include one or more interfaces for receiving sensor signals from one or more sensors, and/or for transmitting one or more control signals, interchangeably used herein with actuation signal, to one or more actuators, and/or other hardware components.

To improve readability without loss of generality, detailed specific technical implementations may be described herein. In particular, the present disclosure refers to an operating system architecture with a kernel. As noted above, however, the kernel, OS kernel, and/or system kernel referred to herein may be regarded as supervisor program, which may have elevated privilege level compared to other software components, programs or software executed on top of the kernel. Accordingly, for those skilled in the art, it is understood that the general concept described herein can be applied to various architectures as long as exception levels and/or privilege levels mentioned in the present disclosure can be utilized.

As mentioned above, the term "safety-critical application" is typically understood as software(-based) application or program whose failure or malfunction can at least in principle result in damage or harm, in particular damage or harm to one or more of machinery, equipment, human health, and environmental health. Safety-related applications or systems, on the other hand, may be defined or understood as comprising aspects not under the control of the respective safety-critical application or system, such as personnel operating the application or system. As the present disclosure focuses on aspects related to the software-based safety-critical application and/or the corresponding computing system, the terms safety-critical and safety-related application or system can be interchangeably or synonymously used herein. In other words, in the context of the present disclosure, the term safety-critical can include or refer to safety-related, and vice versa.

The present disclosure may refer in various instances to a processor, which may typically be realized as single-core or multi-core Central Processing Unit (CPU) having one or more cores or processor cores, which may be used to run an operating system. The present disclosure, however, is not limited in this respect, but can also e.g., be applied to multi-processor hardware that shares a memory. Accordingly, the terms processor, processor core, and core can be used synonymously herein.

The hardware platform, as used herein, can refer to or include a data processing platform or processing circuitry, which may include or refer to e.g., a CPU with one or more processor cores for data processing, or which may refer to a multi-processor architecture. Any reference to a single processor or processor core can include reference to multiple processors or processor cores. Also, the present disclosure is not limited to a particular processor architecture, but rather can be applied to any type or architecture of processors, such as ARM, x86, RISC and others, including multi-processor architectures that share memory.

The hardware platform can include optional components and/or provide optional hardware resources for data processing, such as a physical memory, e.g., Random Access Memory, cache memory, and/or other components. The hardware platform may be implemented in, and/or may be part of the computing system described herein. Hence, the terms hardware platform and computing system may be interchangeably or synonymously used herein.

Executing the hypervisor on the hardware platform may refer to or include running the hypervisor on the at least one processor core of the hardware platform and optional further components or hardware resources thereof. Alternatively, or additionally, executing the hypervisor may include activating the hypervisor on the at least one processor core of the hardware platform.

The hypervisor may generally refer to or denote a supervisory software component allowing to execute the monitoring component on the processor, processor core(s), and/or hardware platform. The monitoring component may refer to a supervisory software element or supervisory component of the hypervisor. The monitoring component may refer to or denote a supervisory software or component configured to monitor execution of the safety-critical application. In other words, the term monitoring component may refer to a software component, which may implement error-detection and/or error-indication. While this definition may correspond to an established understanding in safety engineering, it may deviate from the understanding on the term supervisor software in context of operating systems as a component or program to control or schedule processes and other programs.

The hypervisor and/or the monitoring component thereof may be configured to monitor, determine, and/or confirm safe execution of the safety-critical application. For example, the hypervisor and/or the monitoring component thereof may be configured to analyze a control flow of the processor (core) and/or one or more actions associated with or involving one or more hardware resources of the hardware platform, such as a physical memory, cache, and/or processor buffer.

The hypervisor may further be configured to instantiate the at least one virtual machine. In other words, the hypervisor may be configured to create at least one instance of at least one virtual machine, for example according to one or more predefined specifications for the one or more virtual machines. Optionally, instantiating the at least one virtual machine may include providing one or more virtual hardware resources, for example according to one or more predefined specifications, to the at least one virtual machine. Alternatively, or additionally, instantiating the at least one virtual machine may include mapping one or more physical hardware resources of the hardware platform, for example the at least one processor, processor core, and/or further resources, such as a physical memory of the hardware platform, to one or more virtual hardware resources for the at least one virtual machine.

Alternatively, or additionally, instantiating the at least one virtual machine may include booting and/or executing a guest operating system or operating system of the virtual machine. This may include running a guest operating system kernel or kernel software of the guest operating system. Accordingly, reference to the guest operating system herein can include reference to a guest operating system kernel, and vice versa.

It is emphasized that the present disclosure is not limited to a particular type of guest operating system and/or guest OS kernel, but rather can be used to advantage on any guest OS and/or guest OS kernel. In particular, the guest OS and/or guest OS kernel may be safety-qualified or may be non-safety-qualified. Alternatively, or additionally, the guest OS kernel may be a monolithic kernel, a modular kernel, or a combination thereof. Alternatively, or additionally, the guest OS and/or guest OS kernel may be proprietary or may be at least in part based on open source. For instance, the guest OS may be Linux-based, and/or the guest OS kernel may be a Linux-based kernel.

One or more safety-critical applications may be executed on top of the guest operating system. The at least one virtual machine may provide a virtual computing environment with one or more virtual hardware resources and/or software resources, such as e.g., the guest OS and/or guest OS kernel. Execution of the one or more safety-critical applications on top of the guest OS may refer to or include running the one or more safety-critical applications in the guest OS provided by the virtual machine. Accordingly, one or more functions of the safety-critical application may involve, and/or be controlled by the guest OS and/or guest OS kernel.

As commonly understood, different privilege levels may define different sets of permissions or actions allowed to be performed by the respective component, wherein a higher privilege level includes more permissions when compared to a lower privilege level. By providing or executing the hypervisor at a higher privilege level than the at least one virtual machine, and thus also the at least one safety-critical application executed therein, it can be ensured that the hypervisor and/or monitoring component thereof can take over control of the at least one virtual machine, the guest OS, the guest OS kernel, and/or any process or application running on top of its guest OS, including the at least one safety-critical application. For example, the hypervisor and/or monitoring component thereof may take over control in terms of access of the at least one virtual machine to resources or components of the hardware platform.

Generally, by instantiating the at least one virtual machine and executing the safety-critical application on top of its guest OS, a virtual computing environment can be created and/or controlled by the hypervisor, which maps and/or associates physical hardware resources of the hardware platform to virtual resources of the virtual machine, the guest OS, the guest OS kernel, as well as the processes, programs and applications executed therein, including the at least one safety-critical application. Moreover, due to the higher privilege level of the hypervisor, the monitoring component can comprehensively monitor, and/or analyze any action, and/or event associated with the safety-critical application, the guest OS, and/or the guest OS kernel. In turn, this can allow to detect one or more actions and/or events which could potentially affect correct functioning or safe execution of the safety-critical application, and optionally to perform countermeasures to ensure safe execution of the safety-critical application.

Such actions, or synonymously events, which could potentially affect correct functioning of the safety-critical application, can be referred to herein as actions, and/or events having a relevancy for an integrity, and/or a functioning, for example safe execution, of the safety-critical application. This can include any action or event that could possibly interfere with or influence execution of the safety-critical application or a part thereof, such as modify a virtual resource utilized by the safety-critical application and/or lead to a corrupted state of the safety-critical application.

One or more of such actions and/or events can be defined and included in the "list of predefined actions". The list of predefined actions may, in the context of the present disclosure, refer to a single action or a plurality of actions, respectively events, which could directly and/or indirectly affect execution of the safety-critical application. The list can be provided in abstract form, and providing the list may mean or be construed as defining one or more actions, which may have a relevance for an integrity and/or functioning of the safety-critical application.

The list may be defined and/or stored as data register or structure, for example maintained by, and/or accessible by the hypervisor, and/or its monitoring component. Alternatively, or additionally, the list may be defined based on configuring the at least one processor core, for example one or more MMUs or registers thereof.

As will be further discussed hereinbelow, in an exemplary and non-limiting embodiment, the list of predefined actions may be included or be associated with a memory register for physical memory or memory address space of the hardware platform and/or a page table tree for mapping physical memory or memory space to virtual memory or memory space of the at least one virtual machine. However, other data structures and/or control means can be used instead or in addition.

The hypervisor and/or its monitoring component may be configured to analyze a control flow of the processor and/or processor core. Therein, the processor's and/or processor core's control flow may refer to the order in which individual statements, instructions, function calls of one or more software components or applications are executed and/or evaluated by the at least one processor and/or processor core of the hardware platform.

Further, the hypervisor and/or its monitoring component may be configured to detect, based on analyzing the control flow, that an action on and/or defined in accordance with the list of predefined actions is scheduled or about to be performed. Accordingly, a "to-be-performed" action on the list may, in the context of the present disclosure, relate to an action defined in accordance with or contained in the list, which is scheduled for execution and/or evaluation by the at least one processor core or hardware platform in general.

For instance, one or more criteria or conditions for each of the actions can be defined by or based on the list of predefined actions, and based on determining whether said one or more criteria or conditions for a single action are fulfilled, the hypervisor and/or monitoring component may identify or detect said action as to-be-performed action on the list, and divert the control flow towards the respective handler for said to-be-performed action. Therein, diverting the control flow by the hypervisor may include taking over control of the control flow and directing the control flow towards or to the respective handler of the monitoring component associated with said action on the list.

The handler may refer to a software component including a routine, which may be specifically associated with one or more actions and/or events defined by the list, and which may be configured to trigger a predefined response in response to said one or more actions and/or events occurring. Accordingly, the handler can dictate a particular response or subsequent action or step to be triggered, once one or more actions and/or events defined by the list of predefined actions occur. It should be noted that one handler may be responsible for and/or associated with a single action or a plurality of actions on the list of predefined actions. Accordingly, the monitoring component may maintain or include one or more handlers associated with one or more actions defined in the list of predefined actions.

Based on diverting the control flow to the respective handler and based on a predetermined ruleset, the monitoring component and/or handler may be configured to determine whether the to-be-performed action is to be allowed for execution or whether the to-be-performed action is to be disallowed for execution. For example, actions that can be executed without affecting or without bearing the risk of affecting the safety-critical application may be allowed, and actions that may possibly affect functioning of the safety-critical application may be disallowed. Generally, the predetermined ruleset may define one or more criteria or conditions for each action. The handler may be configured to detect whether the one or more conditions or criteria are fulfilled in order to determine and/or check whether the to-be-performed action should be allowed and can be executed, or whether it should be disallowed, and execution is to be prevented. Optionally, the handler of the monitoring component may be configured to cause said to-be-performed action to be actually performed or executed. This may include actual execution of the to-be-performed action on the hardware platform.

Alternatively, or in addition to checking, by the handler, according to the predetermined ruleset, whether to allow or to disallow the to-be-performed action, the handler may be configured to perform at least one preparation step for the to-be-performed action, and then cause said to-be-performed action to be performed. Therein, causing the action to be performed may include scheduling said action for execution on the at least one processor core. Such preparation step may, for example, involve preparation of (computing) resources, e.g., virtual and/or physical computing resources, such that safe execution of the safety-critical application is ensured, as will be discussed in more detail hereinbelow.

By executing the safety-critical application on top of a guest OS in a virtual machine, which is instantiated by the hypervisor of higher privilege level, the control flow of the processor (core) can be comprehensibly monitored and analyzed by the monitoring component and/or its one or more handlers. This enables the monitoring component and/or the one or more handlers to reliably detect and/or identify one or more actions, as defined by or in accordance with the list of predefined actions, which may have a relevancy for the safety-critical application and/or can affect execution thereof. Moreover, based on the predefined ruleset of the one or more handlers, it may be reliably determined whether a particular action can be executed without affecting the safety-critical application. Alternatively, or additionally, based on the predefined ruleset of the one or more handlers, it may be determined whether a particular action is to be suppressed, e.g., because the safety-critical application may be compromised due to execution thereof. Alternatively, or additionally, a preparatory measure or preparation step may be initiated by the monitoring component and/or the one or more handlers, which may ensure that a particular to-be-performed action can be safely executed, i.e., executed without possibly affecting or compromising the safety-critical application. Overall, this concept can provide a safe execution environment for executing the safety-critical application on top of the guest OS and/or guest OS kernel. In particular, freedom from interference of the safety-critical application from any process or software component running in the guest OS, including the guest OS kernel, as well as from any process that may be executed by the OS guest kernel, may be ensured. Consequential thereto, safe execution can be guaranteed or ensured, without requiring the entire guest OS and/or guest OS kernel to be safety-qualified.

In turn, efforts and costs involved in safety qualification of a guest OS and/or guest OS kernel can be avoided, and the safety application can be safely executed without inferring further limitations or requirements on the guest OS, the guest OS kernel as well as the underlying hardware of the hardware platform. Hence, safety-critical functionality can be integrated in commonly available computing infrastructure, which can also allow for retrofitting such functionality to existing systems. The method of the present disclosure may therefore be of particular advantage in mixed-critical system, although not limited thereto.

In the following, some of the benefits achievable with the method of the present disclosure are exemplary described and summarized with reference to mixed-critical systems using an unqualified or non-safety-qualified guest OS and/or guest OS kernel hosting the safety-critical application. It is emphasized that the present disclosure is not limited to mixed-critical systems and/or use of non-safety qualified kernel software, but rather can be used to advantage in pure safety-critical systems, for example employing a safety qualified guest OS and/or guest OS kernel.

Generally, any (guest) OS kernel or guest OS utilized for hosting a safety-critical application can contribute to one or more safety-critical functions handled by the safety-critical application. As mentioned above, in order to safely execute a safety-critical application, freedom from interference between the guest OS, the kernel and/or any other software component running on the guest OS or kernel should be ensured.

For open-source software with a distributed and unspecified software development model, safety qualification is already challenging and costly. However, when it comes to an open-source monolithic operating system kernel like the Linux kernel, which consists of millions of lines of code, qualification in the sense of the ISO 26262 standard, for example, can become practically infeasible. In consequence, common sense is that it is impractical to use an arbitrary guest OS kernel in a safety context as this requires to freeze the version and carry-out extensive qualification activities as recommended by standards like the ISO 26262.

By the method described herein, freedom from interference can be ensured or guaranteed by providing comprehensive monitoring and control capabilities to the hypervisor, the monitoring, and/or the one or more handlers of the monitoring component. This can, for example, allow to isolate computing resources, for example virtual/physical hardware resources, e.g., memory pages and/or software-based resources used by the safety-critical application, from the guest OS, the guest OS kernel, and/or other software processes executed. In turn, this can allow to use an unqualified OS kernel software, such as the Linux-kernel, for the guest OS in which the safety-critical application is executed.

A non-limiting example of spatial isolation of computing resources, can for instance include spatial isolation of memory, for example private virtual memory, used by the safety-critical application from user processes running non-safety qualified code and/or from the underlying unqualified (guest) operating system or kernel. The latter property may hardly be established as the OS kernel typically has access to all resources commonly used for isolating processes from another or even itself. To achieve this, the method of the present disclosure exploits the benefits of a virtual computing environment. For instance, a virtualization mode of the at least one processor core or hardware platform may be utilized for this purpose. In combination with the high privilege level of the hypervisor, which exceeds the privilege level of any virtual machine in the virtual computing environment, execution of the monitoring component and capability to divert the control flow to one or more handlers can be ensured. Optionally, the hypervisor may be safety-qualified, at least in part.

The hypervisor may be considered as supervisory software, for example a meta-operating system or hypervisor kernel, which is active on the at least one processor core and allows one to execute the monitoring component. In a non-limiting example, a hypervisor mode of the at least one processor core may be utilized for executing the hypervisor, wherein a code of the hypervisor may be limited, for example to a few thousand lines of code, such that it is accessible for any safety or security qualification. This way, freedom from interference can be ensured from one or both the OS kernel and one or more other processing executed based or using the kernel.

Such freedom from interference has not been achievable with any conventional system or safety feature. For instance, the Privileged Access Never (PAN) feature of modern ARM processors or the software-based counterpart (SW-PAN) is based on emulation of the PAN feature is available in mainline Linux with ARM64_SW_TTBR0_PAN kernel configuration option. The goal of the PAN feature, however, is to prevent unintended privileged accesses, for example from Linux kernel running at exception level 1, EL1, to unprivileged user memory, such as e.g., of a safety application running at exception level 0, EL0. However, the PAN feature cannot isolate between different user processes, and it would still allow the guest OS kernel to intentionally access user memory space using dedicated instructions like the LDTR and STTR instructions. Hence, the PAN and/or SW-PAN feature of conventional systems would be insufficient to allow for safe execution of the safety-critical application.

Likewise, conventional systems or techniques may be based on a memory integrity feature, also called hypervisor-protected code integrity or hypervisor enforced code integrity, that implements a hypervisor-based protection of OS kernel memory pages, such that those pages cannot be executed before code integrity has been successfully checked and such that no write to executable memory pages is possible. Also, this approach, however, is based on the assumption that only integrity validated and/or safety-qualified kernel code can be executed. Hence, also this approach may be insufficient for ensuring safe execution of the safety-critical application on a guest OS kernel.

In contrast to the aforementioned conventional approaches or techniques for isolating computing resources, the method of the present disclosure can ensure freedom from interference, for example memory isolation, between a non-safety qualified guest OS, and/or guest OS kernel, and a safety-qualified application, respectively at least one safety-critical application, running in user space on top of this guest OS kernel by implementing the monitoring component executed on or by the hypervisor at higher privilege level than the virtual machine executing the guest OS and kernel. Therein, the hypervisor may optionally be safety-qualified.

According to an embodiment, the to-be-performed action on the list of predefined actions comprises a transition of the control flow between the safety-critical application and the guest operating system. In other words, the to-be-performed action may include or involve a context switch between the safety-critical application and the guest operating system. This can include a context switch or switch of the control flow from the safety-critical application to the guest OS and/or a context switch from the guest OS to the safety-critical application.

As mentioned above, a context switch and/or corresponding transition of the control flow can include storing the state of one process, program, thread, and/or application, so that it can be restored and resume execution at a later point in time. Accordingly, storing the state and/or loading the state for resuming execution can in principle bear the risk of affecting the safety-critical application, for example when an interfering process corrupts the state. Hence, by defining such action on the list of predefined actions and instructing the hypervisor to divert the control flow towards the respective handler, context switching can be performed in safe manner or without affecting the safety-critical application.

According to an embodiment, the handler may be configured to identify and/or detect a transition of the control flow between the safety-critical application and the guest operating system as the to-be-performed action and prepare for the transition of the control flow between the safety-critical application and the guest operating system as the to-be-performed action. Therein, the preparation can comprise changing access permissions to at least one resource, also referred to herein as computing resource, used by the safety-critical application. It is noted that a resource and/or computing resource can refer to a virtual resource and/or physical resource, unless explicitly specified. Also, any such resource can include memory (interchangeably used with memory page(s)) and/or processing resources by the processor. Accordingly, the computing resource may, for example, include a virtual resource, such as virtual memory (virtual private and/or shared memory), and/or virtual processing resources, physical computing resources, as well as software-based resources.

Changing access permission can, for example, involve applying appropriate settings in one or more memory pages and/or memory registers. By changing access permissions to the at least one resource, it may be ensured that a context switch can be reliably detected by the monitoring component and/or hypervisor, and that the control flow can be reliably diverted to the hypervisor, its monitoring component, and/or the respective handler. Hence, it may be ensured that a context switch cannot compromise or otherwise affect execution of the safety-critical application.

According to an embodiment, the to-be-performed action relates to a transition of the control flow from the safety-critical application to the guest operating system, wherein the preparation for the transition of the control flow from the safety-critical application to the guest operating system as the to-be-performed action comprises prohibiting or disabling write access to memory pages used by the safety-critical application. Memory pages of the safety-critical application may refer to virtual memory or memory space, private and/or shared memory, allocated to the safety-critical application, and used for executing the safety-critical application.

Disabling write access can, for example, involve applying appropriate settings in one or more memory pages and/or memory registers, such as setting said memory pages to non-writable and/or read-only. By disabling write access to the memory pages, it may be ensured that any attempt of any process, for example executed by the guest OS and/or guest kernel, triggers an exception, which can cause, trigger, and/or instruct the hypervisor to take over control of the control flow and divert it to the monitoring component and/or respective handler. Hence, it may be ensured that a context switch cannot compromise or otherwise affect execution of the safety-critical application.

In particular, by disabling write access to prepare for a context switch, spatial and/or temporal memory isolation can be ensured, thereby ensuring that the guest OS and/or guest OS kernel cannot alter or modify the memory pages used by the safety-critical application during a context switch, and/or that any such attempt can be reliably detected by the monitoring component.

According to an embodiment, the to-be-performed action relates to a transition of the control flow from guest OS and/or kernel to the safety-critical application, wherein the preparation for the transition of the control flow from the guest operating system to the safety-critical application comprises allowing or enabling write access to memory pages used by the safety-critical application. By allowing or enabling write access to the memory pages allocated to or used by the safety-critical application, it may be ensured that the safety-critical application can resume execution, for example based on loading its previous state, e.g., from the memory pages.

According to an embodiment, the method further comprises, when prohibiting access to memory pages, leaving writable at least one memory area that is designated for data transfer between the safety-critical application and the guest operating system. Said at least one memory area may, for example, include shared memory that is dedicated for data exchange between the safety-critical application and the guest OS and/or kernel, which may in certain scenarios or use cases be wanted. For instance, access to data from other hard- and/or software components may be provided to the safety-critical application. Such shared memory may optionally be validated by the safety-critical application or only accessed for non-safety-relevant functions provided by the safety-critical application, such that leaving writable the at least one memory area cannot compromise or otherwise affect execution of the safety-critical application.

According to an embodiment, in addition to prohibiting write access to memory pages, access to one or more page tables and/or page table trees, PTT, maintained in the virtual machine is modified. Modifying and/or altering access to one or more page tables and/or page table trees can, for example, involve applying appropriate settings in one or more page tables, one or more levels of a page table tree, and/or one or more PTTs. This can ensure proper isolation of hardware resources and freedom from interference.

Generally, a page table refers to a data structure used by a virtual memory system in a computer operating system to store the mapping between virtual memory addresses and a physical memory of the hardware platform, for example in the form of one or more page table entries in the page table and/or a page table tree. Optionally, page tables can hold and/or be associated with permission settings on memory access and/or other settings. Page tables can further be arranged or structured as multilevel or multi- page table trees in hierarchical manner. In multilevel page tables, page table entries of the level-1 page table can be pointers to a level-2 page table (tree) and entries of the level-2 page table (trees) can be pointers to a level 3 page table (tree) and so on. The entries of the last level page table (tree) store actual frame information of the memory, and the level-1 page table (tree) typically contains a single-page table, and the address of that table is typically stored in a Page Table Base Register, PTBR. In case of modern ARM-based processors, pointers to the PTT can be stored in Translation Table Base Registers 0 and/or 1, referred to as TTBR0 and TTBR1. As mentioned above, however, the present disclosure is not limited to a particular processor architecture. When using virtualization, e.g., with a hypervisor, then different stages of address translation may be involved. For instance, the hypervisor may be responsible for a second stage address translation using stage-2 PTT(s), while within a virtual machine the guest OS may be responsible for the first stage using stage-1 PTT(s).

According to an embodiment, in addition to prohibiting write access to memory pages, access is prohibited to a stage-1 page table tree, PTT, maintained in the virtual machine. Prohibiting access permission to the stage-1 PTT can, for example, involve applying appropriate settings in the stage-1 PTT, and/or a base or memory register. For instance, the stage-1 PTT may be set non-readable, non-writable, and/or non-executable. By prohibiting access to the stage-1 PTT any attempt of any process, for example executed by the guest OS and/or guest kernel, to access the stage-1 PTT may trigger an exception, which can cause, trigger and/or instruct the hypervisor to take over control of the control flow and divert it to the monitoring component and/or respective handler.

In addition, any modification of the stage-1 PTT can be effectively blocked, thereby ensuring integrity of the stage-1 PTT and its usability for the safety-critical application. In particular, by prohibiting access to the stage-1 PTT and/or one or more levels of the stage-1 PTT, it can effectively be ensured that memory space pointed to by one or more page table entries of the stage-1 PTT, one or more levels thereof, and/or one or more PTTs of higher stage, such as stage-2 PTTs (and/or one or more levels of a stage-2 PTT), cannot be accessed by a component running at low privilege level, respectively can only be accessed by the hypervisor running at high privilege level. Consequential thereto, the physical memory allocated to the safety-critical application via the page table tree and its one or more stages can reliably be isolated, thereby ensuring safe execution of the safety-critical application.

According to an embodiment, in addition to allowing write access to memory pages, access is allowed to a stage-1 page table tree, PTT, maintained in the virtual machine. By allowing access to the stage-1 PTT, access to the physical memory can be provided. This can ensure that an action, which cannot compromise the safety-critical application and/or the safety-critical application itself can be executed.

According to an embodiment, the instructing of the processor core to divert the control flow, and/or the prohibiting or allowing of access to memory pages, comprises modifying a stage-2 page table tree, PTT, maintained by the hypervisor for the virtual machine.

In an exemplary embodiment, a stage-2 page table (PT) and/or page table tree may be maintained in and/or by the hypervisor for the at least one virtual machine, and a stage-1 page table and/or page table tree may be maintained in and/or by the virtual machine. Optionally, one or more of the stage-1 and stage-2 PT and/or PTT can have one or more PTT levels. Accordingly, allowing or prohibiting access to a stage of a PT/PTT can include allowing or prohibiting access to one or more levels of the respective stage of the PT/PTT. Further, the instructing of the processor core to divert the control flow, and/or the prohibiting or allowing of access to memory pages, may comprise modifying one or more settings for the stage-2 PT and/or PTT, so that in the at least one virtual machine, modifications to the stage-1 PT and/or PTT are prohibited or allowed.

In an example, modifying the stage-2 PTT can include modifying one or more page table entries of the stage-2 PTT or one or more levels of the stage-2 PTT, for example such that a physical and/or virtual memory address mapped to the respective one or more page table entries is modified and/or changed. Such modification of a stage-2 PTT, one or more levels thereof, and/or one or more page table entries thereof, can allow to switch physical and/or virtual memory used by the guest OS and/or the safety-critical application, and hence can provide an effective means for hardware or memory isolation, for example when a context switch between the guest OS or other software process running thereon and the safety-critical application occurs.

Alternatively, or additionally, modifying the stage-2 PTT can include modifying access permissions of one or more page table entries and/or one or more levels of the stage-2 PTT. For example, modifying access permissions can include setting the stage-2 PTT to at least one of non-writable, non-readable, non-executable, writable, readable, and executable, as further discussed hereinbelow.

In an exemplary embodiment, after modifying the stage-2 PTT on one of multiple cores of the processor, translation lookaside buffers, TLBs, of other cores are flushed. This can avoid that other cores use cached PTT entries with outdated address mappings or permissions, and could for that reason accidently access or modify, for example write to, memory used by the safety-critical application.

Providing the list of predefined actions can include activating, for example by the hypervisor and/or its monitoring component, one or more traps on the processor and/or processor core to divert the control flow to the respective handler. In other words, trapping, also referred to as hardware-rooted or hardware-assisted trapping, of the at least one processor and/or processor core may be used to trap and/or divert the control flow into the hypervisor, its monitoring component and/or the respective handler for the to-be-performed action. Generally, a trap may be considered as a condition or criterion, which when fulfilled triggers an exception, which may be detected by the hypervisor and/or monitoring component. In other words, a trap and/or corresponding exception can cause and/or instruct the hypervisor to take over control of the control flow and divert it to the monitoring component and/or the respective handler. Hence, trapping can provide a reliable tool for reliably detecting any action on the list of predefined actions, such as a context switch between the safety-critical application and the guest OS.

Optionally, the trapping and/or diverting of the control flow into the hypervisor may include, trigger, and/or be accompanied with executing an exit of the at least one virtual machine, which can be detected by the monitoring component, for example based on a corresponding exit signal or status code of the virtual machine. The exit of the at least one virtual machine, the corresponding exception and/or trap can allow to invoke the associated functions of the monitoring component and/or the respective handler.

The trapping and/or diverting of the control flow can, in an exemplary implementation, be provoked, caused, and/or triggered by applying appropriate settings in a page table tree, for example a stage-2 page table tree (PTT) maintained by the hypervisor for the virtual machine running the safety-critical application. Alternatively, or additionally, traps could be produced at least in part programmatically, for instance by so called Hypervisor Calls (HVC), and/or whenever the guest OS tries to re-write content of specific core registers of the processor, processor core, and/or memory pages (virtual and/or physical memory pages) that should be protected. An example of such memory pages are other stage-2 memory management unit protected (MMU protected) pages of memory.

In an exemplary implementation, different stages of the PTT may be stored at different locations and/or maintained by different entities or components, for example to further improve or increase hardware isolation. By way of example, the stage-1 PTT may be maintained and/or stored at application or guest OS level, for instance at the safety-critical application and/or guest OS, whereas the stage-2 PTT, may be stored and/or maintained at the hypervisor. Handling the stage-2 PTT or higher stages at the hypervisor that has a higher privilege level than the virtual machine can allow to effectively control access to physical and/or virtual memory, and hence can allow for a more comprehensive overall control of the control flow and improved hardware isolation.

According to an embodiment, the to-be-performed action comprises setting-up of a new safety-critical application by the guest operating system. Setting-up a new safety-critical application may include configuring the safety-critical application, for example in terms of one or more virtual and/or physical resources provided to the safety-critical application for its execution. Alternatively, or additionally, setting-up a new safety-critical application may include creating and/or providing a safe execution environment for the safety-critical application based on configuring one or more virtual and/or physical resources provided to the safety-critical application for its execution. Including the setting-up of a new safety-critical application as an action on the list of predefined actions, which can trigger diverting the control flow to the hypervisor, can ensure that the hypervisor and/or monitoring component are aware of any new safety-critical application running in any one or more virtual machines on the hardware platform. Hence, correct monitoring and safe execution of the new safety-critical application can be ensured.

According to an embodiment, the preparation for the to-be-performed action comprises allowing write access to memory pages that are to be used by the new safety-critical application. In other words, the hypervisor, monitoring component, and/or the respective handler for the to-be-performed action can allow the guest OS and/or guest OS kernel to populate memory pages of the new safety application to be set up. This can, for example, involve applying appropriate settings for different PTT level, which may affect stage-1 PTT and/or stage-2 PTT. Optionally, the hypervisor, monitoring component and/or the respective handler may keep track of the new memory pages added to the stage-1 PTT for the new safety application.

According to an embodiment, in addition to allowing write access to memory pages for the new safety-critical application, execution of code in these memory pages is disallowed. This can, for example, involve applying appropriate settings for different PTT level, which may affect stage-1 PTT and/or stage-2 PTT. Disallowing execution of code in the memory pages for the new safety-critical application can ensure that any attempt of any process to execute code, for example from the guest OS and/or guest OS kernel, is reliably detected and prevented, thereby ensuring that during start-up of the new safety-critical application no interference with resources provided to the safety-critical application can be comprised or modified. For instance, execution permission may be removed in stage-2 PTT, which can also be used to force a trap into the hypervisor when the new safety-critical application starts execution, e.g., to detect when a startup procedure of the safety-critical application is finished.

Alternatively, or additionally, upon completion of the setting up of the new safety-critical application, execution of code in said memory pages is allowed. This can, for example, involve applying appropriate settings in one or more stages of a PTT. In particular, the memory pages referenced in a last stage of a PTT, such as a stage-2 PTT, may be set to executable. Accordingly, after fully setting-up the new safety-critical application, and for example loading the new safety-critical application, execution of code in the memory pages allocated to the new safety-critical application can be allowed, thereby ensuring that the new safety-critical application can be executed.

According to an embodiment, in response to the control flow being diverted to a handler for and/or due to an attempt to execute code in non-executable memory pages of the safety-critical application, respectively of the guest operating system, it is determined that the control flow is transitioning to this safety-critical application, respectively to the guest operating system. As discussed above, setting the memory pages to non-executable can ensure that any attempt of any process of the guest OS and/or guest OS kernel to execute code in said memory pages is trapped and/or results in an exception. Such trapping and/or exception can further indicate that a context switch is occurring, which may instruct, or cause the monitoring component and/or respective handle to analyze and/or check the control flow to determine whether or not the action can be allowed and/or whether or not a preparation step should be performed in order to allow the action to be performed.

According to an embodiment, the method further comprises executing, in the at least one virtual machine, at least one further application on top of the guest operating system. The at least one further application may be a non-safety-qualified application and/or have a lower safety level than the safety-critical application. Accordingly, the method may be performed and/or the safety-critical application may be executed in a mixed-critical system. In particular in such systems, the method described herein can allow to reliably ensure freedom from interference, although the present disclosure and method is not limited in this respect.

Also, it is noted that a plurality of virtual machines, each running one or more safety-critical applications and/or one or more non-safety-critical applications can be instantiated or set-up on the hardware platform and monitored by the hypervisor. Optionally, a plurality of hypervisors and/or monitoring components may be utilized.

According to an embodiment, the method further comprises processing, by the safety-critical application, measurement data acquired by at least one sensor into an actuation or control signal, and actuating at least one land, air, or sea vehicle, at least one robot, and/or any component thereof, with the actuation signal. In other words, based measurement or sensor data from one or more sensors, the safety-critical application may determine the actuation signal to actuate at least one component of a land, air, or sea vehicle, and/or at least one robot, which can be any type of robotic equipment. For instance, an output of the safety-critical application may include the actuation signal, which can actuate one or more display components in a vehicle.

A further aspect of the present disclosure relates to a computing system, which comprises a hardware platform with one or more processors, and/or processor cores, and a (physical and/or virtual) memory for data storage. The computing system is configured to perform steps of the method, as described hereinabove and hereinbelow. It is emphasized that any step, feature, function, and/or element described herein with reference to the method can be a feature, function, and/or element of the computing system, and vice versa.

Yet another aspect of the present disclosure relates to one or more computer programs, comprising machine-readable instructions that, when executed by a computing system, cause the computing system to perform steps of the method, as described hereinabove and hereinbelow, and/or cause the computing system to perform the role of the monitoring component in the context of the method, as described hereinabove and hereinbelow.

A further aspect of the present disclosure relates to a non-transitory machine-readable data carrier, and/or a download product with, and/or storing, one or more computer programs comprising machine-readable instructions that, when executed by a computing system, cause the computing system to perform steps of the method, as described hereinabove and hereinbelow, and/or cause the computing system to perform the role of the monitoring component in the context of the method, as described hereinabove and hereinbelow.

### Brief description of the drawings

These and other aspects of the invention will be apparent from and elucidated further with reference to the embodiments described by way of examples in the following description and with reference to the accompanying drawings, in which
Fig. 1 shows a flowchart illustrating an exemplary computer-implemented method of executing a safety-critical application on a hardware platform;
Fig. 2 shows a block diagram illustrating an exemplary hardware platform and method for executing a safety-critical application; and
Figs. 3 to 5 each show a flowchart illustrating an exemplary computer-implemented method of executing a safety-critical application on a hardware platform.

In the figures, elements which correspond to elements already described may have the same reference numerals. Examples, embodiments or optional features, whether indicated as non-limiting or not, are not to be understood as limiting the invention as claimed.

### Detailed description of exemplary embodiments

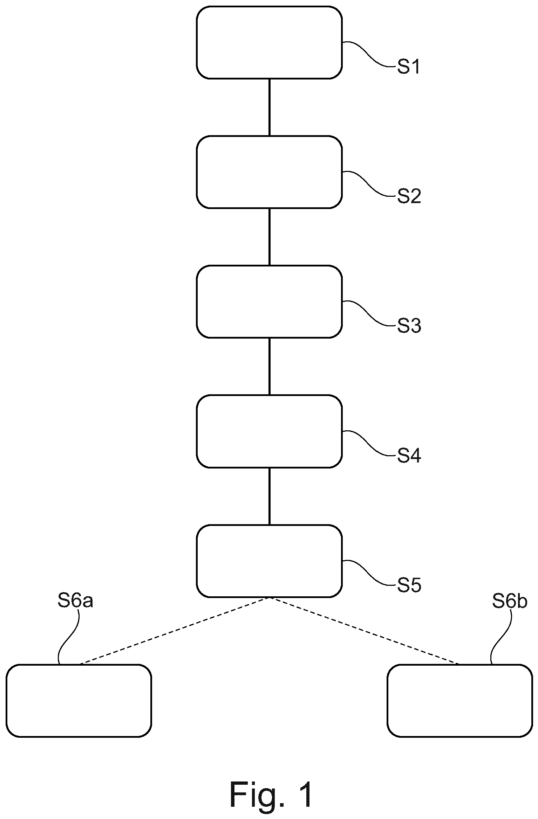

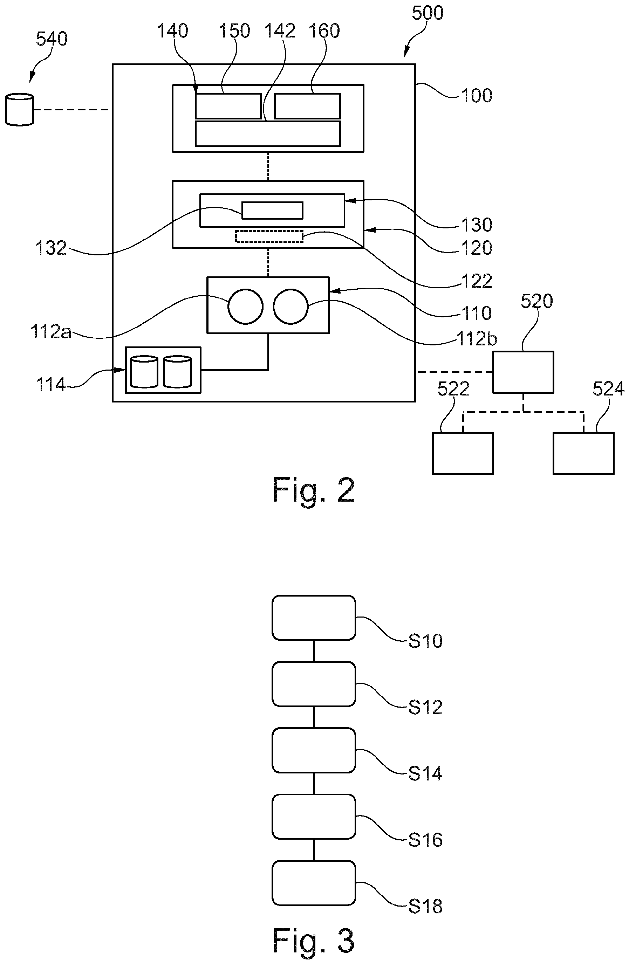

Figure 1 shows a flowchart illustrating an exemplary computer-implemented method of executing a safety-critical application on a hardware platform, for example the hardware platform 100 described with reference to Figure 2.

Figure 2 shows a block diagram illustrating an exemplary hardware platform 100, computing system 500 and method for executing a safety-critical application 150. In the following, it is mutually or commonly be referred to Figures 1 and 2.

As shown in Figure 2, the hardware platform 100 includes a processing circuitry 110, Central Processing Unit 110 and/or processor 110, which includes two processor cores 112a, 112b. The hardware platform 100 may include a single processor core 112a or more than two processor cores 112a, 112b.

The hardware platform 100 further comprises a physical data storage 114 or memory 114. The memory 114 can be any type of hardware-based memory 114, such as Random Access Memory or other type, which can be used as computing resource by the processing circuitry 110.

The hardware platform 100 can be embodied as computing system 500 and/or can be part of a computing system 500, which may comprise optional other components 520, 540, such as one or more communication interfaces 520 and/or one or more other data storages 540. Via the one or more communication interfaces 520, one or more other components or entities may be communicatively and/or operatively coupled to the computing system 500, respectively, the hardware platform 100. For instance, one or more sensors 522 may be coupled to the one or more communication interfaces 520 to provide sensor signals. Alternatively, or additionally, one or more actuators 524 may be coupled to the one or more communication interfaces 520, for example to receive one or more control or actuation signals from the computing system 500 and/or hardware platform 100.

The hardware platform 100 further comprises a hypervisor 120 with a monitoring component 130 and one or more handlers 132. Moreover, the hardware platform 100 comprises at least one virtual machine 140 running a guest operating system 142 and/or guest OS kernel 142. On top of the guest OS 142, one or more safety applications 150 are executed and optionally one or more non-safety-critical applications 160 are executed.

The OS kernel 142 may, for example, be a Linux-based kernel. Also, more than one virtual machine 140 may be executed. The functionalities of the hypervisor 120 in conjunction with the virtual machine 140 and safety-critical application150 are further illustrated in the flowchart of Figure 1.

The method shown in Figure 1 comprises, in step S1, executing, on the hardware platform 100, a hypervisor 120, said hypervisor 120 comprising a monitoring component 130 for one or more safety-critical applications 150.

The method comprises in step S2, instantiating, by the hypervisor 120, at least one virtual machine 140 on a lower privilege level of the hardware platform 100 than a privilege level of the hypervisor 120.

In step S3, the method comprises executing, in the at least one virtual machine 140, at least the safety-critical application 150 on top of a guest operating system 142. Optionally one or more non-safety-critical applications 160 may be executed.

The method comprises in step S4, providing a list of one or more predefined actions that, when executed by the processor core 112a, 112b, have a relevancy for an integrity and/or a functioning of the safety-critical application 150. Providing the list of action may for example mean defining one or more actions potentially affecting integrity and/or a functioning of the safety-critical application 150, for instance based on defining one or more criteria for said one or more actions.

The method comprises a further step S5 of instructing, by the hypervisor 120, the processor core 112a, 112b, when about to execute a to-be-performed action on the list and/or when such action is scheduled for execution on the processor core 112a, 112b, divert the control flow of the processor core 112a, 112b towards a respective handler 132 for this to-be-performed action in the monitoring component 130.

It is emphasized that steps S1 to S5 can be performed in arbitrary sequence or simultaneously, at least in part. The method comprises a further step S6a, which includes, when the control flow is diverted to a handler 132 for a to-be-performed action, checking and/or analyzing, by the handler 132, according to a predetermined ruleset, whether to allow or to disallow the to-be-performed action, and when the to-be-performed action is to be allowed, causing the action to be performed.

The to-be-performed action may, for example, relate to setting-up a new safety-critical application and/or the to-be-performed action comprises a transition of the control flow between the safety-critical application 150 and the guest operating system 142 or other process.

Alternatively, or additionally to step S6a, the method comprises a step S6b of performing, by the handler 132, at least one preparation for the to-be-performed action, and then causing this to-be-performed action to be performed.

As described hereinabove and hereinbelow, the general method illustrated in Figure 1 can be supplemented with one or more optional features, steps, or aspects. Such exemplary steps and aspects, as well as advantages and benefits achieved by the method, are summarized in the following with continued reference to Figure 2 as well to Figure 1.

Spatial and/or temporal freedom-from-interference, for example memory isolation, between a not safety qualified guest OS kernel 142 and a safety qualified application 150 running in user space on top of this guest OS kernel 142 can be achieved by implementing a monitoring component 130 executed on a preferably safety-qualified hypervisor 120.

Figure 2 depicts an exemplary configuration with a hypervisor 120, e.g., with a Linux-kernel based hypervisor 120, running on two processors cores 112a, 112b, not limiting the pattern to the case of microkernel-rooted hypervisors or others. For instance, the hypervisor 120 may be implemented as user-space application.

The monitoring component 130 can be considered or referred to as Virtual Machine Monitor (VMM) application that can allow to run the virtual machine 140 (VM) on top of the hypervisor 120, including a guest OS Kernel 142 such as the Linux kernel. In the illustrated setup, only safety-critical applications 150 are running on top of guest OS Kernel 142. The supervision executed by the hypervisor 120 and/or monitoring component 130 allows one to establish a safe execution environment on top of the unsafe guest OS kernel 142. The monitoring component 130 can either be integrated into the hypervisor 120 or can be implemented as stand-alone application of the hypervisor 120.

This setup can, for example, target a detection of unauthorized memory accesses as a or in the course of a "to-be-performed action" that is defined on or in accordance with the list of predefined actions. Such unauthorized memory access may come from the guest OS kernel 142 into the private memory of any safety-critical application 150 that may run on top of the guest OS and/or kernel 142.

This might also include unintended memory accesses from any other user process into the private memory of the safety-critical application 150.

In exemplary implementation, prevention of such accesses can be achieved by the hardware-assisted or hardware-rooted trapping into the hypervisor 120, which may result in executing a VM exit from the virtual machine 140, in which the safety-critical application150 runs. Moreover, prevention of such accesses can be achieved by invoking the related monitoring component 130 and/or the respective handler 132 functions in the hypervisor 120.

The trapping can be provoked by applying appropriate settings in a stage-2 page table tree (PTT) maintained by the hypervisor 120 for the virtual machine 140 under consideration, respectively running the safety-critical application 150. In addition to or instead of that, traps could be produced by so called Hypervisor Calls (HVC), or whenever the guest OS 142 tries to re-write content of specific core registers or other stage-2 memory management unit protected pages of memory.

By exploiting such trapping mechanism, the hypervisor 120 is enabled to detect and or notice, as to-be-performed action that could impact integrity and/or functioning of the safety-critical application 150, one or more of the setting-up of a (new) safety-critical application 150, when the setup of a (new) safety-critical application 150 has been completed and starts its regular execution, and when a context switch inside the virtual machine 140 is made, e.g., by a system call or other process running in user space.

In an exemplary implementation, when the hypervisor 120 detects a context switch in the VM 140, the control flow is diverted, for example by trapping, into the monitoring component 130 and the respective handler 132. To ensure safe execution of the safety-critical application 150 and ensure that it can resume execution after the context switch, the monitoring component 130 and/or handler 132 applies a stage-2 PTT with permissions set such that guest OS and/or kernel 142 cannot access stage-1 PTT and pages allocated to any of the safety-critical applications 150. Optionally, permissions may be set on a per-CPU-core base, i.e., only the CPU core which is currently executing safety-critical application 150 in the virtual machine may get permission to access the safety-critical application's 150 private memory.

In case of switching to one of the safety applications in the guest OS 142, the monitoring component 130 and/or handler 132 applies a stage-2 PTT with permissions set, such that stage-1 PTT and pages allocated to this safety-critical application 150 (also referred to as safety application 150 herein), can be accessed without limitations.

The above pattern can be utilized in case of static memory mapped to the safety-critical user process or for the case of dynamically mapped memory. In the former case, the physical memory 114 used for that purpose must be defined constantly, e.g., as part of the configuration of a VM 140. In case of letting the guest OS 142 dynamically decide which memory to use, an interaction pattern between hypervisor 120 and guest OS 142 can be implemented on the basis of shared memory and a notification mechanism of choice and/or by letting the guest OS 142 making HVC and passing in the data as payload to this kind of meta system calls.

Figure 3 show a flowchart illustrating an exemplary computer-implemented method of executing a safety-critical application 150 on a hardware platform 100. In particular, Figure 3 illustrates the start-up process or setting-up of a (new) safety-critical application 150, as described inter alia with reference to Figures 1 and 2.

Setting-up a (new) safety-critical application 150 starts in Figure 3 with step S10 that may include diverting the control flow into the hypervisor 120 and/or monitoring component as described with reference to the foregoing Figures.

When a (new) safety-critical application 150 is set up by the guest OS kernel 142, the monitoring component 130 and/or handler 132 can allow, in step S12, the guest OS 142 to populate memory pages of the safety-critical application150 to be set up by applying appropriate settings in the stage-2 PTT in step S12. Accordingly, the memory pages of the safety-critical application150 may be configured without restrictions in steps S12 during start-up or setting-up of the safety-critical application 150.

The monitoring component 130 may also keep track of the new memory pages added to the stage-1 PTT for the safety-critical application 150 in step S12.

In a further step S14, the monitoring component 130 and/or handler 132 removes access rights in the stage-2 PTT to user space memory and memory pages holding page table trees of the safety-critical application 150.

In a subsequent step S16, write access rights can be provided or added to user space memory of the safety-critical application 150 in the stage-2 PTT, and execution rights may be removed for memory pages holding one or more exception handlers. Accordingly, a trap into the hypervisor 120 may be forced when an exception occurs, and the exception handler may start execution.

When the setup of a new safety application 150, respectively all safety-critical applications 150 on a VM 140, have been completed and they start their regular execution phase, the hypervisor 120 may set the permission for memory pages of the safety-critical application 150 pointed to by stage-1 PTT leaves, in particular change them from no-execute to execute in stage-2 PTT in order to allow execution of the safety-critical application 150 under consideration.

This can allow for an implicit detection of the completion of the start-up of the safety-critical application 150 by start of execution with stage-2 PTT initially configured with non-execute permission. Alternatively, or additionally, the start-up completion of safety-critical application 150 may be explicitly indicated by a dedicated VM exit and/or HVC.

Steps S14 and S16 can be done or repeated for each safety-critical application 150 started by the guest OS 142 and/or kernel 142, until all safety-critical applications are set-up and running illustrated as step S18 in Figure 3.

As the hypervisor 120 and guest OS 142 may be running on multiple CPU cores 112a, 112b, the following specific aspects may be taken into consideration. While stage-2 PTT modifications are carried out by monitoring component 130 on one CPU core 112a it may be ensured that on other CPU cores 112b the unmodified stage-2 PTT is still enforced. Whenever stage-2 PTT modifications have been done by the monitoring component 130 on one CPU core 112a, TLB flushes of affected modified PTT entries can be done on all used CPU cores 112a, 112b in order to avoid that other CPU cores 112b are using cached PTT entries with outdated address mapping or permissions.

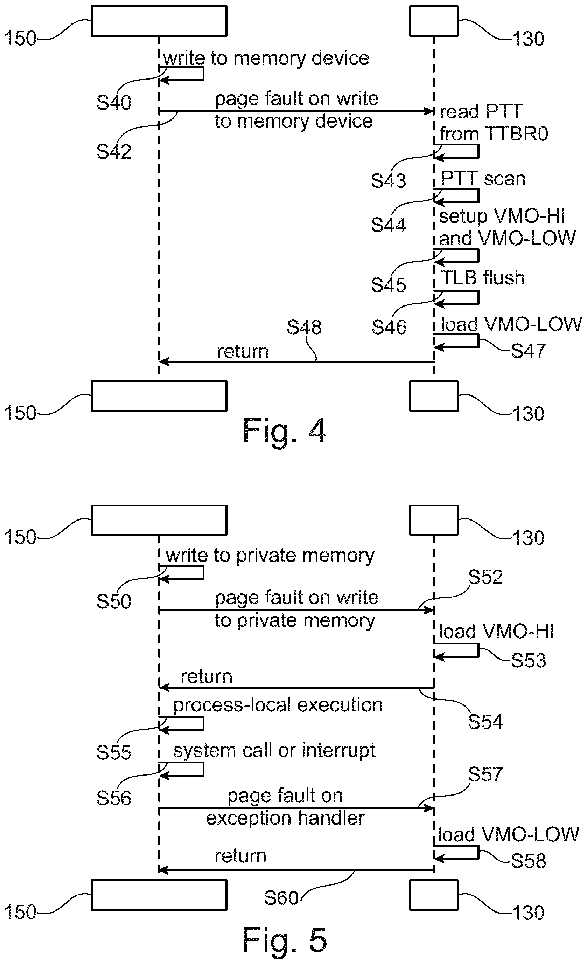

Figure 4 and 5 each show a flowchart illustrating an exemplary computer-implemented method of executing a safety-critical application on a hardware platform. In particular, Figures 4 and 5 illustrate a sequence of events for handling private memory and PTTs of the safety-critical application 150, including context switching.

In the following, various aspects, and an exemplary implementation, as well as advantages achieved with the method, are described. The following description therefore also applies to Figures 1 to 3 and the corresponding description, which is supplemented based on Figures 4 and 5 in the following.

In an exemplary implementation, Linux is used as guest OS 142 and ARM architecture-based processor cores 112a, 112b, e.g., ARMv8 architecture.

As described with reference to Figures 1 to 3, each instance of the hypervisor's 120 user-level virtual machine monitor (VMM) and/or monitoring component 130 may manage one VM 140 only. This is, however, not a pre-requisite. In a normal setup, the monitoring component 130 may maintain one set of memory areas mapped to the VM 140. This set can commonly be defined and administered by a page table tree. For simplicity, we assume that the page table tree (PTT) for managing the set of memory pages per VM 140 is maintained in a microkernel 122 (see Fig. 2) as part of a so-called VM object or VMO. In particular, a plurality of VM objects may be utilized, each being associated with a particular stage-2 PTT.

According to the method described herein, multiple PTTs per VM 140 can be introduced, each managed as part of a separate VM object. This can allow each thread of the monitoring component 130 running on a core 112a, 112b to select its own PTT used for the stage-2 MMU (memory management unit) on the respective core 112a, 112b.

Upon a VM exit, the thread of the monitoring component 130 on the relevant core 112a, 112b may re-iterate the decision which VM object and/or which stage-2 PTT should be the active one.

The intended guarantee for spatial freedom from interference can be based on concept of the stage-2 MMU marking the memory pages of the safety-critical (user) process, referred to as safety-critical application 150, to be guarded as read-only whilst the safety-critical process or safety-critical application 150 itself is not the executing process on the respective core 112a, 112b. Thereby, modifications to the memory pages from outside the context of the safety-critical process or safety-critical application 150 can be prevented. Optionally, in addition to protecting (setting permissions of) the actual memory pages of the safety-critical application 150, also stage-1 PTT modifications of the safety-critical application's 150 PTT may be prevented.

Further, this allows with the write protection being enabled for the memory pages to be protected, the core-local stage 2 MMU to deliver an exception upon any write access to them. In turn, the write protection can be lifted if and only if the safety-critical user process or safety-critical application 150 which should be guarded needs write access to its memory.

In a preferred embodiment, at least two VM objects may be used, where the following configurations may be present.

A first VM object may be used whenever software in a safety context or of high criticality is active. The corresponding VM object may be referred to herein as VMO-HI and its configuration may be stored inside the respective VM object. VMO-HI may define that all pages mapped to the VM 140 under consideration are marked as read, write and executable, optionally wherein memory pages containing the exception handlers of the guest OS kernel may be marked as non-executable (see steps S14, S16 in Figure 3). This can ensure that any attempt of a system call inside the guest OS 142 whilst VMO-HI is active, can provoke a VM exit into the hypervisor 120.

A second VM object may be used whenever the guest OS 142 is executing in a non-safety critical context or software of low criticality. This VM object can be defined as VM object-LOW (also referred to as VMO-LOW herein, in particular in Figs. 4 and 5). VMO-LOW can define that the memory pages considered as private memory to any safety-critical process or safety-critical application 150 are marked as non-writeable and all other memory pages reserved for the VM 140 are marked as read, write, and executable.

Optionally, in both VM objects, VMO-LOW and VMO-HI, memory which holds the safety-critical processes' or safety-critical application's 150 page table may be marked as read only, once booting or setting-up is completed.

In addition to the above, one may optionally exclude a few pages of each safety process' or safety-critical application's 150 private memory and mark these pages in both VM objects as writeable. This memory may be used, whenever guest OS 142 interaction with the safety user process or safety-critical application 150 is foreseen. From the view of a safety-critical process, this memory may be considered non-trustworthy.

In the following, the activation of VMO-HI and VMO-LOW is discussed in more detail. For instance, startup of the safety-critical application 150 and indication of startup completion can be implemented as follows.

Once the safety-critical application 150 hosted inside the VM 140 has completed its startup phase a VM exit can be used for informing the monitoring component 130 about the private memory of the processes and the location of the stage-1 PTT. Here, exchange of data can be done via HVC from exception level 1, EL1 (e.g., the Linux kernel) or by letting the process under consideration write to a memory page which is not mapped to the EL2 related stage-2 MMU. Agreement on the address of this memory page can be done by configuring it as a shared memory device and let the safety-critical process or safety-critical application 150 write to it via sysfs. In both cases a VM exit is happening and the hypervisor 120 can take over control for setting the memory guarding up.

As illustrated in the sequence or flow chart of Figure 4, setting the memory page and page table protection into operation can be implemented as follows. In particular, Figure 4 illustrates events between the safety-critical application 150 and the monitoring component 130.

The safety-critical application 150 may attempt to write to its memory at step or event S40, which triggers a page fault on write at step S42 leading to diverting of the control flow to the monitoring component 130.

The private memory of the safety-critical process or safety-critical application 150, i.e., the set of relevant memory pages, may be obtained from the process-specific PTT as generated by the guest OS 142. This may involve a complete traversal of all related page tables, e.g., page table scan, at step S44.

The starting address of the PTT may be provided in the TTBR0 register once a VM exit happened and whilst the safety-critical process or safety-critical application 150 under consideration has been the active one or it is passed to the monitoring component 130 via HVC. This allows the monitoring component 130 to set up VMO-HI and VMO-LOW at step S45 and record the address of the entry node as well as the memory pages where the PTTs of the safety-critical process(es) or safety-critical applications 150 are stored. These memory pages may optionally also be protected.

Once the monitoring component 130 has created the VMO-HI and the VMO-LOW, the microkernel 122 or hypervisor 120 can execute a TLB flush on all relevant cores 112a, 112b and upon need at step S46.

Besides creating the VMO-HI and VMO-LOW, the monitoring component 130 can mark the memory pages which are carrying the safety-critical process or safety-critical application 150 specific page tables inside the guest OS kernel 142 write protected, e.g., for both VMOs VMO-HI and VMO-LOW. This can ensure that the guest OS kernel 142 cannot silently or unnoticedly modify the memory mapped to a safety-critical process or safety-critical application 150 at any later stage.

Additionally, the monitoring component 130 can check the memory regions used for different safety-critical processes or applications 150 and ensure that these are only overlapping for the case of shared memory and that the set of shared memory pages is consistent through the processes involved.

After executing the TLB flush, VMO-LOW may be activated or loaded at step S47, and it may be returned to the safety-critical application 150 at step S48.

The swapping of VM objects and respective loading of stage-2 PTT is illustrated in Figure 5. In particular, Figure 5 illustrates events between the safety-critical application 150 and the monitoring component 130.

When a VM exit is triggered at step S50 with a write attempt to the private memory to a guarded memory page, the monitoring component 130 can check at step S52 if the safety-critical process or safety-critical application 150 was the violator. In such cases the TTBR0 register may point to the PTT of the latter. In this case, the monitoring component 130 can activate the VMO-HI and respective stage-2 PTT for the safety-critical application 150 and return (step S54) to the safety-critical process or application 150, which can then execute the process at step S55.

In case the guest OS kernel 142 generated the page fault, e.g., by a system call or interrupt, by attempting to execute an exception handler at step S 56, the monitoring component 130 can deactivate VMO-HI, activate, or switch to the VMO-LOW at step S58, and return to the guest OS kernel 142 at step S60. This allows the guest OS kernel 142 to proceed with the exception handler's execution.

Other write access yielding a VM exit, e.g., as generated by the guest OS kernel 142 may be considered as erroneous behavior and may be flagged accordingly, or generally speaking handled as needed and/or defined (e.g., including killing of the VM 140).

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A method for executing a safety-critical application (150) on a hardware platform (100) comprising at least one processor core (112a, 112b), the method comprising the steps of:
• executing, on the hardware platform (100), a hypervisor (120), said hypervisor (120) comprising a monitoring component (130) for the safety-critical application (150);
• instantiating, by the hypervisor (120), at least one virtual machine (140) on a lower privilege level of the hardware platform than a privilege level of the hypervisor (120);
• providing a list of one or more predefined actions that, when executed by the processor core (112a, 112b), have a relevancy for an integrity and/or a functioning of the safety-critical application (150);
• instructing, by the hypervisor (120), the processor core (112a, 112b) to: when about to execute a to-be-performed action on the list, divert the control flow towards a respective handler (132) for this to-be-performed action in the monitoring component (130);
• executing, in the at least one virtual machine (140), at least the safety-critical application (150) on top of a guest operating system (142); and
• when control flow is diverted to a handler (132) for a to-be-performed action:
∘ checking, by the handler (132), according to a predetermined ruleset, whether to allow or to disallow the to-be-performed action, and when the to-be-performed action is to be allowed, causing the action to be performed; and/or
∘ performing, by the handler (132), at least one preparation for the to-be-performed action, and then causing this to-be-performed action to be performed.

2. The method of claim 1, wherein the to-be-performed action comprises a transition of the control flow between the safety-critical application (150) and the guest operating system (142).

3. The method of any one of claims 1 or 2, wherein the preparation for a transition of the control flow between the safety-critical application (150) and the guest operating system (142) as the to-be-performed action comprises changing access permissions to at least one resource used by the safety-critical application.

4. The method of any one of claims 1 to 3, wherein:
• the preparation for a transition of the control flow from the safety-critical application (150) to the guest operating system (142) as the to-be-performed action comprises prohibiting or disabling write access to memory pages used by the safety-critical application (150); and
• the preparation for a transition of the control flow from the guest operating system (142) to the safety-critical application (150) comprises allowing or enabling write access to memory pages used by the safety-critical application (150).

5. The method of claim 4, further comprising: when prohibiting access to memory pages, leaving writable at least one memory area that is designated for data transfer between the safety-critical application (150) and the guest operating system (142).

6. The method of any one of claims 4 to 5, wherein, in addition to prohibiting write access to memory pages, access is prohibited to a stage-1 page table tree, PTT, maintained in the virtual machine (140); and/or
wherein in addition to allowing write access to memory pages, access is allowed to a stage-1 page table tree, PTT, maintained in the virtual machine (140).

7. The method of any one of claims 1 to 6, wherein the instructing of the processor core to divert control flow, and/or the prohibiting or allowing of access to memory pages, comprises modifying a stage-2 page table tree, PTT, maintained by the hypervisor (120) for the virtual machine (140).

8. The method of claim 7, further comprising: after modifying the stage-2 PTT on one of multiple cores of the processor core, flushing translation lookaside buffers, TLBs, of other cores (112a, 112b).

9. The method of any one of claims 1 to 8, wherein
• the to-be-performed action comprises setting-up of a new safety-critical application (150) by the guest operating system (142), and
• the preparation comprises allowing write access to memory pages that are to be used by the new safety-critical application (150).

10. The method of claim 9, wherein:
• in addition to allowing write access to memory pages for the new safety-critical application (150), execution of code in these memory pages is disallowed; and
• upon completion of the setting up of the new safety-critical application (150), execution of code in said memory pages is allowed.

11. The method of any one of claims 1 to 10, wherein: in response to the control flow being diverted to a handler for an attempt to execute code in non-executable memory pages of the safety-critical application (150), respectively of the guest operating system (142), it is determined that the control flow is transitioning to this safety-critical application (150), respectively to the guest operating system (142).

12. The method of any one of claims 1 to 11, further comprising: executing, in the at least one virtual machine (140), at least one further application (160) on top of the guest operating system (142).

13. The method of any one of claims 1 to 12, further comprising:
• processing, by the safety-critical application (150), measurement data acquired by at least one sensor (522) into an actuation signal; and
• actuating at least one land, air, or sea vehicle, and/or at least one robot, and/or any component thereof, with the actuation signal.

14. A computing system (500), comprising:
a hardware platform (100) with one or more processor cores (112a, 112b); and
a memory (114) for data storage;
wherein the computing system is configured to perform steps of the method according to any one of the preceding claims.

15. One or more computer programs, comprising machine-readable instructions that, when executed by a computing system (500), cause the computing system to perform the method of any one of claims 1 to 13, and/or to perform the role of the monitoring component (130) in the context of the method of any one of claims 1 to 13.

16. A non-transitory machine-readable data carrier and/or a download product with the one or more computer programs of the preceding claim.
